# EUROPÄISCHE PATENTSCHRIFT

(11) **EP 3 737 488 B1**
(45) Veröffentlichungstag und Bekanntmachung des Hinweises auf die Patenterteilung: **03.07.2024**
(21) Anmeldenummer: 19716062.5
(22) Anmeldetag: 19.03.2019
(51) Int. Cl.: B01D 46/00, B01D 46/12, B01D 47/02, B01D 50/00

(54) **VORABSCHEIDER-STUFEN-MODUL, MEHRSTUFIGER AEROSOLABSCHEIDER MIT DEM VORABSCHEIDER-STUFEN-MODUL, NACHRÜST- UND BETRIEBSVERFAHREN DAFÜR**
PRE-SEPARATOR-STAGE MODULE, MULTISTAGE AEROSOL SEPARATOR WITH SAID PRE-SEPARATOR-STAGE MODULE, RETROFITTING METHOD, AND OPERATING METHOD FOR SAME
MODULE D'ÉTAGE DE PRÉ-SÉPARATEUR, SÉPARATEUR AÉROSOL À PLUSIEURS ÉTAGES AVEC LEDIT MODULE D'ÉTAGE DE PRÉ-SÉPARATEUR, PROCÉDÉ D'AJOUT ET DE FONCTIONNEMENT

(30) Priorität: 23.03.2018 DE 102018002447
(43) Veröffentlichungstag der Anmeldung: 18.11.2020
(73) Patentinhaber: MANN+HUMMEL Life Sciences & Environment Germany GmbH, 45549 Sprockhövel (DE)
(72) Erfinder: KOEHN, Jörg, 45549 Sprockhövel (DE)
(74) Vertreter: Mann + Hummel Intellectual Property
(86) Internationale Anmeldenummer: PCT/EP2019/000087
(87) Internationale Veröffentlichungsnummer: WO 2019/179659

(56) Entgegenhaltungen:
- EP-A1- 2 921 548
- WO-A1-2016/159848
- CN-U- 206 152 546
- DE-A1-102011 122 158
- GB-A- 839 618
- KR-A- 20180 102 530
- US-A1- 2014 053 731

## Beschreibung

Die Erfindung betrifft einen Abscheider gemäß dem Oberbegriff des Anspruchs 1. Weiter betrifft die Erfindung eine als in den Abscheider einsetz- und herausnehmbares Modul ausgebildete Vorabscheider-Stufe, ein Verfahren zum Nachrüsten eines Abscheiders sowie ein Verfahren zum Betreiben des Abscheiders.

Ein gattungsgemäßer Abscheider ist in der WO 2016/159848 A1 beschrieben. Der Abscheider dient insbesondere zum Abscheiden von Ölnebel aus der Abluft, die bei der Metallbearbeitung in der Automobilindustrie anfällt, insbesondere bei MQL-Anwendungen (minimal quantitaty lubrication). Der Abscheider weist ein schrankartiges Gehäuse auf, innerhalb dessen mehrere in Strömungsrichtung aufeinander folgende und übereinander angeordnete Filterelemente angeordnet sind. Die Feinheit der Filterelemente im Filterstapel nimmt in Strömungsrichtung immer weiter zu, sodass zunächst gröbere, dann feine und anschließend sehr feine Partikel aus der Abluft abgetrennt werden. Zur Abtrennung der feinsten Partikel wird speziell ein HEPA-Filter beschrieben. Bei den ersten beiden Filtern handelt es sich üblicherweise um Koaleszenz-Filter. Zudem kann dem gröbsten der Filter ein Vorfilter vorgeschaltet sein, bei dem es sich beispielsweise um einen in einem Rahmen angeordneten gefalteten Filter aus Polyestervlies handelt. Der Vorfilter ist ein Grobfilter, der insbesondere größere feste Partikel wie Metallteilchen zurückhalten und ein Verstopfen der nachfolgenden feineren Filter verhindern soll. Der Kerngedanke der WO '848 besteht darin, dass das zu reinigende Rohgas vor dem Eintritt in den Filterstapel mit Fluid befeuchtet wird. Die höhere Feuchtigkeit soll dazu führen, dass das abzutrennende Öl sich besser am Koaleszenz-Filter abscheidet, wodurch sich die Abtrennungsrate verbessert. Das vom Koaleszenz-Filter abtropfende Öl wird in einem Sammelbehälter am Boden des Gehäuses aufgefangen und dient als Fluid zur Befeuchtung des Rohgases. Es wird mittels einer Pumpe über Rohrleitungen in die Eintrittskammer für das Rohgas am unteren Ende des Abscheider-Gehäuses eingespritzt und dort vom Rohgas aufgenommen, bevor dieses über den Filterstapel in Richtung auf den Auslass des Gehäuses geführt wird.

Aus der US 2015/0075385 A1 ist ein ähnlich aufgebauter Abscheider bekannt, in dem eine Sprühvorrichtung, welche stromabwärts des Hauptfilterelements angeordnet ist, dazu eingesetzt wird, das Hauptfilterelement zur Verbesserung der Abscheidungsleistung mit Wasser zu besprühen. DE 10 2011 122158 A1 beschreibt einen Abscheider mit den Merkmalen des Oberbegriffs des Anspruchs 1, GB 839 618 A offenbart einen Luftfilter mit einem Gehäuse, in dem ein Filterelement und eine Sprühvorrichtung zum Besprühen des Filterelements mit Wasser sowie eine aus dem Gehäuse herausgeführte Leitung zur Zufuhr des Wassers zur Sprühvorrichtung angeordnet sind.

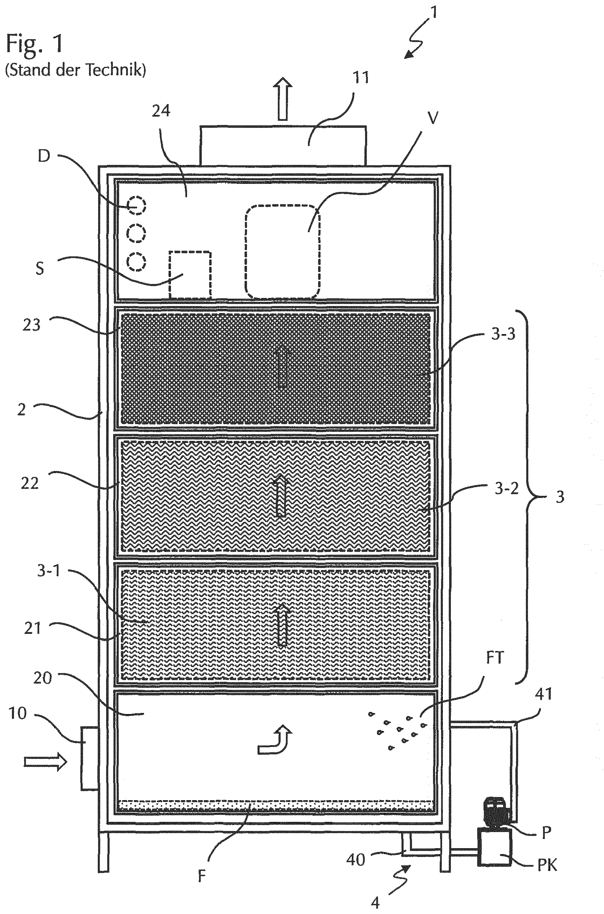

Ein nach dem Prinzip der WO '848 arbeitender Abscheider ist schematisch in Figur 1 dargestellt. Der Abscheider 1 weist ein schrankartiges Gehäuse 2 auf, dessen Inneres über eine hier nicht dargestellte Tür zugänglich ist. Im unteren Bereich des Gehäuses ist ein Einlass 10 für Rohgas vorhanden, das das Gehäuse, wie mit den Pfeilen angedeutet, von unten nach oben durchströmt und das Gehäuse 2 an dessen oberem Ende durch einen Auslass 11 wieder verlässt. Das Gehäuse 2 ist in mehrere Abschnitte 20 bis 24 unterteilt. In den Abschnitten 20 bis 24 sind nicht näher bezeichnete Trag- oder Rahmenelemente vorhanden, an denen beispielsweise unterschiedliche Funktionselemente des Abscheiders angebracht werden können. Im obersten Abschnitt 24 sind im gezeigten Beispiel ein Ventilator V zum Fördern des Gases durch den Abscheider, eine Steuervorrichtung S und Druckanzeigen D angeordnet, an denen der Druck im Bereich der einzelnen Filterelemente ablesbar ist. Der mit 3 bezeichnete Abschnitt dient der Aufnahme der Hauptfilterelemente 3-1, 3-2 und 3-3 und wird nachfolgend als Hauptabscheider-Stufe bezeichnet. Die Hauptfilterelemente können beispielsweise in einer ausziehbaren Schublade mit gasdurchlässigem Boden angeordnet sein. Zum Benutzer hin, d.h., dem Betrachter zugewandt, kann die Schublade eine hier der Übersichtlichkeit halber nicht dargestellte Stirnwand mit Handgriff aufweisen, an dem die Schublade samt Filterelement aus dem Gehäuse herausgezogen werden kann, beispielsweise um den Filter auszutauschen. Wie schon zur WO '848 erwähnt, nimmt die Feinheit der Filter von unten nach oben zu. Das Hauptfilterelement 3-1, üblicherweise ein Koaleszenz-Filter, ist also gröber als das Hauptfilterelement 3-2, welches ebenfalls ein Koaleszenz-Filter ist. Der feinste Filter ist das Hauptfilterelement 3-3, für welches in der Regel ein HEPA-Filter verwendet wird. Bevor das Rohgas in die Hauptabscheider-Stufe 3 eintritt, wird es durch den untersten Abschnitt 20 geleitet, an dessen Boden sich ein Fluidreservoir F befindet. Aus dem Fluidreservoir F ist eine Ableitung 40 herausgeführt, die in eine Pumpenkammer PK mündet. Von dort wird das Fluid mittels einer Pumpe P über eine Zuleitung 41 dem Abschnitt 20 wieder zugeführt. Dabei wird das Fluid zu kleinen Fluidtröpfchen FT vernebelt und vom Rohgas aufgenommen, bevor dieses durch das erste Hauptfilterelement 3-1 geleitet wird. Hier wird bereits ein großer Anteil des im Rohgas enthaltenen Öls am Hauptfilterelement 3-1 niedergeschlagen, die Öltröpfchen agglomerieren zu größeren Tropfen, fallen vom Filterelement ab und in das Fluidreservoir F zurück. Das Recyclieren des Fluides mittels der Sprühvorrichtung 4 hat den Vorteil, dass kein zusätzliches Fluid zum Befeuchten des Rohgases verwendet werden muss, wodurch zusätzliche Verunreinigungen in das System eingeschleppt werden könnten. Zudem wird die Gesamtmenge an Fluid gering gehalten, sodass nur sehr geringe Mengen an Fluid aus dem System entnommen und entsorgt werden müssen.

Die mit den vorstehend beschriebenen Abscheidern erzielten Abscheidungsraten sind in der Regel sehr hoch, grundsätzlich aber immer noch verbesserungsfähig. Die in den Filterstapeln verwendeten Hauptfilterelemente, also Hochleistungs-Koaleszenz-Filter und HEPA-Filter, sind vergleichsweise teuer, sodass ein entscheidender Faktor bei der Kostenreduzierung eine möglichst lange Standzeit der Filterelemente ist. Aufgabe der vorliegenden Erfindung ist es entsprechend, einen Abscheider der eingangs beschriebenen Art anzugeben, der bei sehr hohen Abscheidungsraten kostengünstig betrieben werden kann.

Die Lösung dieser Aufgabe gelingt mit der Vorabscheider-Stufe gemäß Anspruch 1 sowie dem Abscheider gemäß Anspruch 2. Bevorzugte Ausführungsformen sind in den abhängigen Ansprüchen beschrieben. Weiter wird die Aufgabe durch das Verfahren zur Nachrüstung eines Abscheiders gemäß Anspruch 9 sowie das Betriebsverfahren nach Anspruch 11 gelöst. Bevorzugte Verfahrensvarianten ergeben sich aus den jeweiligen abhängigen Ansprüchen.

In einem ersten Aspekt betrifft die Erfindung also einen Abscheider zur Abscheidung einer Flüssigkeit aus einem Rohgas, aufweisend
- ein Gehäuse mit einem Einlass für das Rohgas und einem Auslass für Reingas,
- eine Hauptabscheider-Stufe mit mindestens einem Hauptfilterelement,
- eine Vorabscheider-Stufe, die der Hauptabscheider-Stufe stromaufwärts vorgeschaltet ist, wobei Hauptabscheider-Stufe und Vorabscheider-Stufe im Strömungsweg zwischen Einlass und Auslass angeordnet sind,
- ein Flüssigkeitsreservoir sowie
- eine Sprühvorrichtung zur Entnahme und zum Versprühen von Flüssigkeit aus dem Flüssigkeitsreservoir,
wobei die Vorabscheider-Stufe eine solche nach Anspruch 1 ist und einen Filter der Filtergruppe "Coarse" oder "ePM10" entsprechend ISO 16890-1 :2017-08 aufweist.

Ein Kerngedanke der Erfindung besteht also darin, eine Vorabscheider-Stufe mit einem relativ groben Vorfilter in Kombination mit einer Sprühvorrichtung zu verwenden, die diesen Filter mit Flüssigkeit aus einem Flüssigkeitsreservoir besprüht. Unter Besprühen ist dabei ein direktes Benetzen des Filters mithilfe der Sprühvorrichtung zu verstehen. Zum Beispiel kann eine Sprühdüse der Sprühvorrichtung direkt auf die Oberfläche des Filters gerichtet sein, sodass die aus der Sprühdüse versprühte Flüssigkeit unmittelbar auf den Filter trifft. Alternativ ist es möglich, die Sprühdüse so auszurichten, dass die Flüssigkeit zunächst von der Filteroberfläche weg austritt, dann aber infolge der Schwerkraft auf die Filteroberfläche fällt, ähnlich der Beregnung mit einem Rasensprenger. In jedem Fall trifft die Flüssigkeit also ohne Mitwirkung von Schleppmitteln unmittelbar aus der Sprühvorrichtung auf die Filteroberfläche auf, im Unterschied zur WO '848, wo Flüssigkeit vom Rohgas aufgenommen wird und erst mit diesem zum Filter gelangt. Dies führt zu einer deutlich verbesserten Abscheidung im Vergleich zu einem herkömmlichen "trockenen" Vorfilter. Es werden nicht nur feste Partikel wie Metallteilchen, Ruß, Schleifpartikel oder Ähnliches aus dem Rohgas herausfiltriert, bevor sie die Hauptabscheider-Stufe erreichen und die dort verwendeten erheblich teureren Filterelemente verunreinigen und verstopfen können, sondern der mit Flüssigkeit benetzte Filter der Vorabscheider-Stufe bewirkt eine deutlich erhöhte Abscheidung von Aerosolen aus dem Rohgas. Diese gelangen damit ebenfalls in deutlich geringerem Ausmaß zur Hauptabscheider-Stufe und den darin enthaltenen Hauptfilterelementen. Letztere müssen daher deutlich weniger Aerosol abfangen, was ihre Wirkungs- und Lebensdauer im Vergleich zu herkömmlichen Abscheidern deutlich verlängert.

Bei dem erfindungsgemäß in der Vorabscheider-Stufe eingesetzten Filter handelt es sich um einen Filter der Gruppe "Coarse" oder "ePM10" entsprechend der Norm ISO 16890-1:2017-08. Die Gruppe "Coarse" untergliedert sich in fünf Klassen, die sich durch den mittleren Abscheidegrad (Am) unterscheiden und die für die Filtration von Grobteilen vorgesehen sind und einem vergleichsweise geringen Qualitätsgrad entsprechen. Bei der Gruppe "ePM10" handelt es sich um die nächst höhere Qualitätsstufe, die sich in zwei Klassen unterteilt und vor allem Anwendung als Einlassfilter findet. Beide Gruppen enthalten also relativ grobe und preiswerte Filter, die sich an sich nicht zum Abtrennen feiner Partikel eignen und in trockenem Zustand nicht in der Lage sind, in nennenswertem Ausmaß Partikel zurückzuhalten, die mit den Hauptfilterelementen in der Hauptabscheider-Stufe aus dem Rohgas abgetrennt werden können. Wird der Filter der Vorabscheider-Stufe jedoch, wie erfindungsgemäß vorgesehen, mit Flüssigkeit besprüht, haften an dem feuchten Filter erheblich größere Mengen Aerosol aus dem Rohgas an, wodurch sich eine spürbare Entlastung der Hauptfilterelemente ergibt. Der Wirkungsgrad der erfindungsgemäßen Vorabscheider-Stufe mit befeuchtetem Filter ist erheblich größer als derjenige eines trockenen Filters, über den befeuchtetes Rohgas geleitet wird, wie dies in der WO '848 beschrieben ist. Welcher Filter konkret aus den beiden angegebenen Filtergruppen ausgewählt wird, ist von den Bedingungen abhängig, unter denen der Filter eingesetzt werden soll. Die Auswahl richtet sich dabei insbesondere nach Art, Größe und Menge der abzufangenden Partikel, Strömungsgeschwindigkeit des Rohgases und den Prozessdrücken.

Der erfindungsgemäße Abscheider kann grundsätzlich in Verbindung mit allen Arten von Rohgasen eingesetzt werden, wie sie auch bisher mit gattungsgemäßen Abscheidern aufgereinigt wurden. Die Erfindung kann unter anderem für kontrollierte Abscheideprozesse sowie eine Anpassung der Verteilung und/oder Konzentration von Aerosolpartikel im Rohgas eingesetzt werden. Sie kann eingesetzt werden, wenn trockene Filter durch niedrigen Massenstrom zu verkleben oder verstopfen drohen. Die Erfindung eignet sich auch für die Rauch- und Gasphasenwäsche und besonders zum Abscheiden von Öl aus Luft, insbesondere im Bereich der metallverarbeitenden Industrie, Automobil- und Lebensmittelindustrie. Der erfindungsgemäße Abscheider kann beispielsweise zum Abtrennen von Öl aus einem Rohgas eingesetzt werden, das einem Gefriertrocknungsschritt bei der Verarbeitung von Lebensmitteln entstammt, oder zum Abtrennen von Schmier- oder Kühlöl aus der Abluft der metallverarbeitenden Industrie. Besonders gut eignet sich die Erfindung auch zum Reinigen eines relativ trockenen Rohgases aus einem MQL-Verfahren. Erfindungsgemäß kann der Begriff "Rohgas" sowohl ein einheitliches Gas als auch eine Mischung verschiedener Gase umfassen. In gleicher Weise meint der Begriff "Flüssigkeit" im Sinne der Erfindung sowohl eine einzelne Flüssigkeit als auch eine Mischung aus verschiedenen Flüssigkeitskomponenten. "Reingas" bezeichnet ein von Aerosol weitgehend oder vollständig befreites Rohgas.

Ein weiterer Vorteil der Erfindung besteht darin, dass der erfindungsgemäße Abscheider sowie das erfindungsgemäße Verfahren zu dessen Betrieb in großen Teilen mit Abscheidern und Verfahren des Standes der Technik übereinstimmen. Abgesehen von der speziellen Vorabscheider-Stufe, deren Filter mittels einer Sprühvorrichtung besprüht wird, und dem zusätzlichen Sprühvorgang stimmen die übrigen Vorrichtungsbestandteile und Verfahrensschritte mit denjenigen des Standes der Technik weitestgehend überein. Dies erleichtert dem Benutzer die Bedienung, erlaubt eine kostengünstige Herstellung unter Verwendung bekannter Komponenten und ermöglicht zudem eine Umrüstung existierender Systeme auf das verbesserte erfindungsgemäße System. Besonders bevorzugt besitzt der erfindungsgemäße Abscheider also einen grundsätzlichen Aufbau, wie er in Zusammenhang mit Fig. 1 unter Bezugnahme auf die WO '848 beschrieben wurde. Er weist besonders bevorzugt mehrere übereinander angeordnete Hauptfilterelemente in der Hauptabscheider-Stufe auf, insbesondere ein Hauptfilterelement 3-1, welches üblicherweise ein Koaleszenz-Filter und gröber als das Hauptfilterelement 3-2 ist, welches zweckmäßig ebenfalls ein Koaleszenz-Filter ist. Der feine Filter ist zweckmäßig das Hauptfilterelement 3-3, für welches in der Regel ein HEPA-Filter verwendet wird. Die Durchströmung der übereinander angeordneten Vor- und Hauptabscheider-Stufen erfolgt bevorzugt von unten nach oben.

Ein in weiterer Aspekt der Erfindung betrifft eine Vorabscheider-Stufe, die als Modul ausgebildet ist, das in einen Abscheider einsetzbar und wieder herausnehmbar ist. Unter einem Modul wird dabei in üblicher Weise eine Baugruppe verstanden, die insgesamt vorgefertigt ist und somit besonders leicht eingebaut oder ausgetauscht werden kann. Das erfindungsgemäße Modul weist dabei einen Filter der Filtergruppe "Coarse" oder "ePM10" entsprechend ISO 16890-1:2017-08, wenigstens eine Sprühdüse zum Besprühen des Filters, wenigstens eine Zuleitung zur Versorgung der wenigstens einen Sprühdüse mit Flüssigkeit und eine Kupplung zum Anschluss der wenigstens einen Zuleitung an die Sprühvorrichtung des Abscheiders auf und ist in einem schubladenartigen Gehäuse mit Seitenwänden und einem gasdurchlässigen Boden angeordnet. Das erfindungsgemäße Modul kann dabei nicht nur als leicht zu montierendes und einfach auszuwechselndes Ersatzteil eines erfindungsgemäßen Abscheiders dienen, sondern auch für die Nachrüstung eines Abscheiders des Standes der Technik verwendet werden, der keine Vorabscheider-Stufe mit benetzbarem Filter besitzt.

Das Nachrüsten des erfindungsgemäßen Moduls ist besonders einfach bei Abscheidern möglich, die bereits über ein Pumpensystem zum Recyclieren von abgetrennter Flüssigkeit verfügen. Die Ausgangsseite der Pumpe des Pumpensystems muss dann lediglich über die Kupplung des erfindungsgemäßen Moduls mit der wenigstens einen Zuleitung für die wenigstens eine Sprühdüse verbunden werden. Unter einer Kupplung ist dabei jede geeignete Anschlussmöglichkeit zu verstehen, mit der eine Leitung der Sprühvorrichtung des Abscheiders mit der Zuleitung des erfindungsgemäßen Moduls verbunden werden kann. Im einfachsten Fall handelt es sich bei der Verbindung um Rohrstutzen, die ineinander geschoben werden. Der Einbau des Moduls in einen Abscheider des Standes der Technik kann an jeder geeigneten Stelle stromaufwärts des ersten Hauptfilterelements der Hauptabscheider-Stufe erfolgen. Üblicherweise besitzen herkömmliche Abscheider unterhalb des ersten Hauptfilterelements einen Einlassraum für das Rohgas (Abschnitt 20 in Figur 1). Häufig ist dort hinreichend Platz zum Einbau des erfindungsgemäßen Moduls vorhanden, sodass der Einbau ohne größere Umbaumaßnahmen am Abscheider in einfacher Weise erfolgen kann. Besitzt der Abscheider des Standes der Technik kein Pumpensystem zur Flüssigkeits-Rezirkulation, kann ein solches bei der Nachrüstung des erfindungsgemäßen Moduls ebenfalls mit nachgerüstet werden.

Von Vorteil werden die Vorabscheider-Stufe bzw. das erfindungsgemäße Modul so ausgelegt, dass sie in der Durchströmungsrichtung einen möglichst geringen Raumbedarf aufweisen. Bevorzugt wird daher als Filter der Vorabscheider-Stufe ein flacher Filter verwendet, der nicht in der Durchströmungsrichtung aufgefaltet ist. Als Filter wird vorzugsweise ein Filtervlies aus Kunststoff oder Metall eingesetzt. Geeignete Kunststoffe sind beispielsweise Polyolefine, insbesondere Polyethylen, als Metalle können beispielsweise Aluminium, Edelstahl oder Chromstahl verwendet werden. Kunststofffilter eignen sich insbesondere für den Einsatz bei der Reinigung korrosiver Rohgase.

Zur Verbesserung der Trennleistung kann das Filtervlies mit einer Filterauflage bedeckt sein, insbesondere einer solchen, die in der Lage ist, feinere Teilchen als das Filtervlies abzutrennen. Auch bei der Filterauflage handelt es sich allerdings um ein relativ preiswertes Material mit einem geringeren Wirkungsgrad als die Hauptfilterelemente der Hauptfilterstufe. Die Abtrennung feiner Teilchen bleibt also weiterhin der Hauptfilterstufe des Abscheiders vorbehalten. Als Filterauflagen kommen solche aus Filtergewebe, Filterschwamm oder feinerem Filtervlies infrage, wobei letzteres bevorzugt ein Spinnvlies aus Kunststoff ist. Lamellenfilter können ebenfalls verwendet werden. Bei allen vorgenannten Filtermaterialien handelt es sich grundsätzlich um aus dem Stand der Technik bekannte, leicht erhältliche und preisgünstige Materialien.

Um einen leichten Einbau und Austausch zu ermöglichen, ist die Vorabscheider-Stufe bzw. das Modul in ein Gehäuse eingebaut. Dabei handelt es sich um ein schubladenartiges Gehäuse mit Seitenwänden, einem gasdurchlässigen Boden und optional einer gasdurchlässigen Decke, die gegebenenfalls als abnehmbarer oder aufklappbarer Deckel ausgebildet sein kann. Nach dem Einbau in einen Abscheider liegt der gasdurchlässige Boden strömungsaufwärts, die Decke strömungsabwärts. Für Boden und Decke geeignet sind beispielsweise Gitterstrukturen oder Lochplatten aus Metall oder Kunststoff. Auf den Boden wird der Filter der Vorabscheider-Stufe aufgelegt und gegebenenfalls mit einer Filterauflage bedeckt. Gegebenenfalls kann die Filterauflage zusätzlich mit einer gasdurchlässigen Abdeckung in Form eines Gitters oder Lochblechs abgedeckt werden.

Das Gehäuse der Vorabscheider-Stufe bzw. des Moduls ist zweckmäßig so aufgebaut, dass es als herausziehbare Schublade in das Gehäuse des Abscheiders eingebaut werden kann. An gegenüberliegenden, zu den Gehäuseseiten des Abscheiders benachbarten Seitenwänden des Schubladen-Gehäuses sind zu diesem Zweck entsprechende Halterungsvorrichtungen vorgesehen. In einer einfachen Ausführungsvariante kann es sich dabei um flanschartige Haltevorsprünge handeln, die beispielsweise auf entsprechenden Tragholmen im Abscheider zu liegen kommen und auf diesen entlang gleiten können.

Die mindestens eine Sprühdüse zum Besprühen des Filters wird zusammen mit der wenigstens einen Zuleitung ebenfalls in das Gehäuse von Vorabscheider-Stufe bzw. Modul integriert. Die Kupplung, mit der die wenigstens eine Zuleitung an die Sprühvorrichtung des Abscheiders angeschlossen wird, ist zweckmäßig so angeordnet, dass sie durch eine Öffnung des Gehäuses von außen zugänglich ist, oder sie ist durch eine Öffnung im Gehäuse nach außen herausgeführt, und zwar möglichst derart, dass sie Ein- und Ausbau der Vorabscheider-Stufe bzw. des Moduls nicht behindert. Vorteilhaft wird die wenigstens eine Zuleitung innerhalb des Gehäuses so verlegt, dass sie entlang wenigstens einer der Seitenwände, vorzugsweise mehrerer und besonders bevorzugt aller Seitenwände verläuft. Auf diese Weise behindert die Zuleitung das Einlegen und Herausnehmen des Filters kaum, stellt aber bei einer entlang mehrerer oder aller Seitenwände verlaufenden Zuleitung ausreichend Anschlussmöglichkeiten für Sprühdüsen zur Verfügung.

Grundsätzlich kann bereits eine einzige Sprühdüse zum Besprühen des Filters der Vorabscheider-Stufe ausreichend sein. Erfindungsgemäß bevorzugt ist es jedoch, wenn die Oberfläche des Filters möglichst gleichmäßig und vollständig mit Flüssigkeit benetzt wird. Dies ist durch Verwendung mehrerer Sprühdüsen im Allgemeinen deutlich besser möglich. Von Vorteil versorgt die wenigstens eine Zuleitung daher mehrere Sprühdüsen, die vorzugsweise in gleichmäßigen Abständen entlang der wenigstens einen Zuleitung angeordnet sind. Es ist selbstverständlich ebenfalls möglich, sich verzweigende Zuleitungen zu verwenden, die über die Fläche des Filters geleitet werden. Dies erleichtert zwar eine gleichmäßige Besprühung des Filters, erschwert aber den Austausch desselben.

Welche Art von Sprühdüsen verwendet wird, richtet sich in erster Linie nach Art und Grö-βe der zu besprühenden Filteroberfläche, der Tröpfchengröße des zu erzeugenden Sprühnebels, Sprühdruck und Sprühmenge. Je nach Sprühnebel können beispielsweise Flachdüsen, Runddüsen, Kegel- oder Hohlkegeldüsen eingesetzt werden. Die Sprühbilder der einzelnen Düsen ergeben dann das Gesamtsprühbild, das die Filteroberfläche möglichst gleichmäßig abdecken sollte. Dabei ist es grundsätzlich möglich, die einzelnen Düsen unterschiedlich anzusteuern, um beispielsweise unterschiedliche Sprühmengen zu erzeugen. Die Ansteuerung kann zum Beispiel mithilfe einer Steuervorrichtung, beispielsweise der Steuervorrichtung der Pumpe der Sprühvorrichtung, unter Zuhilfenahme von Ventilen in an sich bekannter Weise erfolgen. Bevorzugt, weil deutlich einfacher, ist jedoch ein gleichmäßiger Betrieb aller Sprühdüsen.

Die Sprühdüsen können grundsätzlich sowohl stromaufwärts wie stromabwärts des Filters der Vorabscheider-Stufe angeordnet werden. Bevorzugt ist jedoch eine Anordnung der Sprühdüsen stromabwärts des Filters. Auf diese Weise ist eine deutlich effektivere Befeuchtung des Filters möglich, da die Feuchtigkeit den Filter nach und nach von oben nach unten durchdringt und dieser so sehr gleichmäßig feucht gehalten werden kann. Dies erhöht die Effektivität des Filters. Zudem nimmt das Rohgas, das durch den Filter hindurch tritt, auf dem Weg durch den Filter Feuchtigkeit auf. Im Raum stromabwärts des Filters, wo durch das Versprühen von Flüssigkeit durch die Sprühdüsen eine hohe Feuchtigkeit herrscht, reichert sich das Rohgas weiter mit Feuchtigkeit an, wodurch sich die Effektivität der Abscheidung von Aerosol an den Koaleszenz-Filtern der nachgeschalteten Hauptabscheider-Stufe weiter verbessert. Je feiner der Sprühnebel dabei erzeugt wird, desto besser sind die auf diese Weise erzeugten Effekte. Insgesamt wird deshalb eine deutlich verbesserte Abscheidung von Aerosol aus dem Rohgas im Vergleich zu herkömmlichen Abscheidern beobachtet.

Eine weitere Verbesserung der Abscheidung kann durch Temperierung der zu versprühenden Flüssigkeit erzielt werden. Die Temperiervorrichtung kann zum Beispiel ausgebildet sein, die Flüssigkeit im Flüssigkeitsreservoir oder in einer Zuleitung zu erwärmen oder zu kühlen. Ist das einströmende Rohgas beispielsweise sehr kalt und enthält es sogar gefrorene Aerosolpartikel, wie dies beispielsweise bei Abluft aus Schockgefriertrocknungs-Vorgängen der Fall ist, gelingt die Abscheidung gefrorener Öltröpfchen meist nur sehr schlecht. Die Erfindung schafft hier Abhilfe, indem eine Temperiervorrichtung für die Flüssigkeit vorgesehen ist. Mithilfe der Temperiervorrichtung kann die Flüssigkeit erwärmt werden. Der von der Flüssigkeit benetzte Filter erwärmt sich ebenfalls und erwärmt seinerseits das hindurchströmende Rohgas, woraufhin das gefrorene Aerosol auftaut und sich am Filter niederschlagen kann. Umgekehrt kann die Abscheidungsrate sehr heißen Rohgases durch entsprechende Kühlung des Filters mittels heruntergekühlter Flüssigkeit verbessert werden. Zudem verringert sich auf diese Weise die Gefahr, dass Komponenten des Abscheiders durch das heiße Rohgas beschädigt werden. Zur Messung der Temperatur wird zweckmäßig ein Temperatursensor verwendet, der besonders bevorzugt die Temperatur der Flüssigkeit im Flüssigkeitsreservoir misst. Da die Flüssigkeit zur Einstellung der Temperatur des Filters verwendet wird, ist ihre Temperatur auch repräsentativ für die Temperatur des Filters selbst.

Das Besprühen des Filters der Vorabscheider-Stufe kann kontinuierlich oder diskontinuierlich erfolgen. Welche der beiden Vorgehensweisen im jeweiligen Anwendungsfall gewählt wird, hängt von den vorgefundenen Prozessparametern ab. Grundsätzlich ist zum Erreichen einer hohen Abscheidungsrate zu beachten, dass der Filter nicht trocken laufen sollte, da ansonsten die Trennleistung absinken würde. Aus Kostengründen ist es bevorzugt, das Besprühen des Filters in Intervallen durchzuführen. Die Länge der Intervalle und die Pausen dazwischen werden in geeigneter Weise dem jeweiligen Verfahren angepasst. Die Steuerung kann, wie vorstehend bereits beschrieben, durch die Steuervorrichtung des Pumpsystems, die Steuervorrichtung des Abscheiders oder alternativ über eine gesonderte Steuervorrichtung erfolgen. Es kann auch eine hydraulische Steuerung eingesetzt werden, wie sie beispielsweise in der DE 19937224 A1 beschrieben ist. Dabei ist im Rahmen der Erfindung jedoch nur ein relativ geringer Druck erforderlich, der lediglich zum Versprühen der Flüssigkeit ausreichen muss.

Die Flüssigkeit, die zum Besprühen des Filters der Vorabscheider-Stufe verwendet wird, entstammt bevorzugt dem Flüssigkeitsreservoir, das im Abscheider zum Auffangen der Flüssigkeit vorhanden ist, die mithilfe der Koaleszenz-Filter der Hauptabscheider-Stufe aus dem Rohgas abgetrennt wird. Entsprechend befindet sich das Flüssigkeitsreservoir üblicherweise stromaufwärts der Hauptabscheider-Stufe - und im Falle der Erfindung der Vorabscheider-Stufe - in einem Bodenbereich des Abscheiders. Wie bereits erwähnt, hat die Verwendung der abgeschiedenen Flüssigkeit den Vorteil, dass keine zusätzliche Flüssigkeit, die gegebenenfalls weitere Verunreinigungen enthalten kann, in das System eingeführt werden muss. Beispielsweise handelt es sich bei der Flüssigkeit um Wasser, Öl, Kühl- oder Schmiermittel, zum Beispiel aus der Metallverarbeitung, oder Mischungen derselben.

Ob der Filter der Vorabscheider-Stufe ausreichend mit Flüssigkeit benetzt ist, wird in einer bevorzugten Variante der Erfindung über den Füllstand des Flüssigkeitsreservoirs festgestellt. Da die Menge an Flüssigkeit im Flüssigkeitsreservoir im Vergleich zu der Flüssigkeit, die aus eingeleitetem Rohgas abgeschieden wird, sehr groß ist und ansonsten keine Flüssigkeit zugeführt wird, kann zumindest für eine gewisse Zeitdauer von einer während des Filtrationsvorgangs grundsätzlich konstanten Flüssigkeitsmenge im System ausgegangen werden. Die Menge an Flüssigkeit im Flüssigkeitsreservoir ändert sich daher im Wesentlichen nur durch die Menge, die von der Sprühvorrichtung zum Befeuchten des Filters aus dem Reservoir entnommen wird. Die Flüssigkeitsmenge, die zu einem ausreichenden Befeuchten des Filters benötigt wird, kann in einfacher Weise ermittelt werden. Die Sollfüllmenge des Flüssigkeitsreservoirs entspricht damit der Gesamtmenge der Flüssigkeit im System, abzüglich der zum Befeuchten des Filters benötigten Menge. Steigt die Flüssigkeitsmenge im Flüssigkeitsreservoir über die Sollfüllmenge an, ist offensichtlich zu wenig Flüssigkeit für ein ausreichendes Befeuchten des Filters vorhanden. Zeigt also ein Füllstandsmesser im Flüssigkeitsreservoir einen Anstieg der Flüssigkeitsmenge über die Sollfüllmenge an, sollte ein Befeuchtungsvorgang für den Filter gestartet werden. Entsprechend kann die Steuervorrichtung so ausgebildet sein, dass sie beim Erhalt eines entsprechenden Signals vom Füllstandsmesser den Betrieb der Sprühvorrichtung startet, welche dann den Filter wieder ausreichend befeuchtet.

Auf lange Sicht ändert sich die Füllstandshöhe im Flüssigkeitsreservoir selbstverständlich durch den Eintrag von Flüssigkeit, die aus dem Rohgas abgetrennt wird. Dieses Problem ist aus dem Stand der Technik jedoch grundsätzlich bekannt und wird dadurch gelöst, dass bei Erreichen einer vorgegebenen maximalen Füllstandshöhe Flüssigkeit aus dem System über einen Auslass abgelassen oder abgepumpt wird. Dieses Vorgehen wird zweckmäßig auch im Rahmen der Erfindung angewandt. Zum Abpumpen wird sinnvollerweise dieselbe Pumpe verwendet, die auch zum Betrieb der Sprühvorrichtung eingesetzt wird. Durch entsprechende Ventilsteuerung kann die Pumpe entweder als Druckpumpe für die Zufuhr von Flüssigkeit zu der wenigstens einen Sprühdüse oder als Saugpumpe zum Abpumpen überschüssiger Flüssigkeit aus dem System verwendet werden.

Die Erfindung soll nachfolgend anhand von Zeichnungen näher erläutert werden. Die Zeichnungen sind rein schematisch und dienen der Erläuterung bevorzugter Ausführungsbeispiele der Erfindung, ohne dass die Erfindung auf diese beschränkt wäre. In den Zeichnungen bezeichnen gleiche Bezugszeichen gleiche Teile, wobei jedoch nicht immer sämtliche Teile mit Bezugszeichen versehen sind. Im Einzelnen zeigen:
- Fig. 1: eine Seitenansicht eines Abscheiders des Standes der Technik;
- Fig. 2: eine Seitenansicht eines Ausführungsbeispiels eines erfindungsgemäßen Abscheiders;
- Fig. 3: eine perspektivische Ansicht eines erfindungsgemäßen Moduls mit angeschlossener Pumpenvorrichtung;
- Fig. 4: eine alternative Anordnung von Sprühdüsen mit entsprechenden Zuleitungen;
- Fig. 5: eine Veranschaulichung eines möglichen Sprühbildes auf der Oberfläche eines Filters und
- Fig. 6: einen Querschnitt entlang der Linie X-X in Fig. 3.

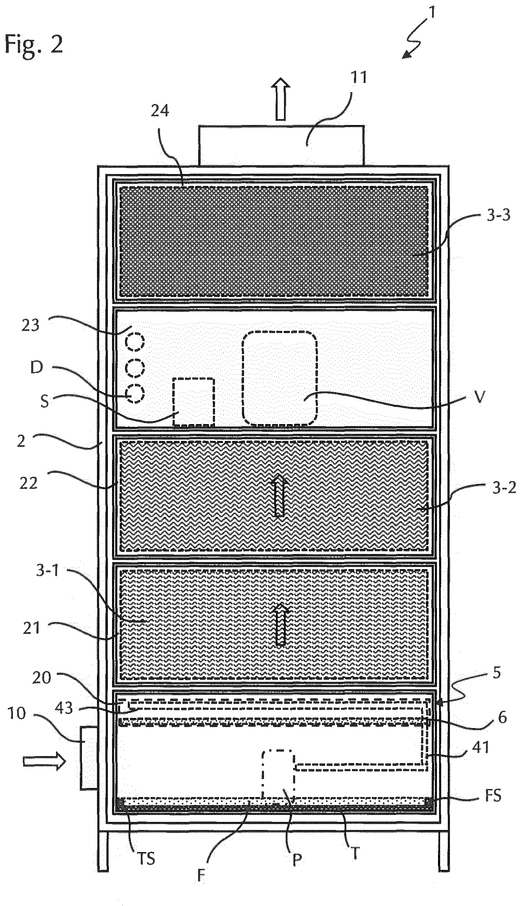

Der in Figur 2 gezeigte erfindungsgemäße Abscheider 1 entspricht in seinem Grundaufbau im Wesentlichen dem eingangs besprochenen Abscheider des Standes der Technik aus Figur 1. Übereinstimmende Merkmale werden daher hier nicht nochmals beschrieben. Eine Abwandlung besteht darin, dass der Ventilator V, die Steuervorrichtung S sowie die Druckanzeigen D, welche den Druck im Bereich der Hauptfilterelemente 3-1, 3-2 und 3-3 anzeigen, nicht mehr im obersten Abschnitt 24 des Gehäuses 2, sondern im darunter liegenden Abschnitt 23 platziert sind. Stattdessen ist nun das Hauptfilterelement 3-3 im obersten Abschnitt 24 angeordnet. Die vertauschte Anordnung hat den Vorteil, dass eventuell durch den Betrieb der Komponenten im Abschnitt 23 erzeugte Verunreinigungen vom Hauptfilterelement 3-3 abgefangen werden können und nicht ungefiltert durch den Auslass 11 in die Umgebung des Abscheiders 1 oder eine mit dem Auslass 11 verbundene Rohrleitung gelangen. Statt der vertauschten Anordnung in den Abschnitten 23 und 24 könnte aber genauso gut die in Figur 1 dargestellte Anordnung gewählt werden.

Gleiches gilt im Hinblick auf die Anordnung der Pumpe P und der mit diesen verbundenen Leitungen 40 und 41. Auch die in Figur 1 dargestellte Anordnung außerhalb des Gehäuses 2 des Abscheiders 1 hätte im erfindungsgemäßen Ausführungsbeispiel beibehalten werden können. Hier wurde jedoch eine Anordnung gewählt, bei der die Pumpe P innerhalb des Gehäuses 2 angeordnet ist, konkret im untersten Abschnitt 20. Die Pumpe P steht am Boden des Gehäuses im Flüssigkeitsreservoir F, aus dem sie Flüssigkeit unmittelbar aufsaugen kann. Die in Figur 1 benötigte Leitung 40 kann daher entfallen. Die Flüssigkeitszuleitung 41, mit welcher die Pumpe Flüssigkeit zur Düsenzuleitung 43 und von dort zu den in Figur 2 nicht dargestellten Sprühdüsen fördert, ist innerhalb des Gehäuses 2 verlegt.

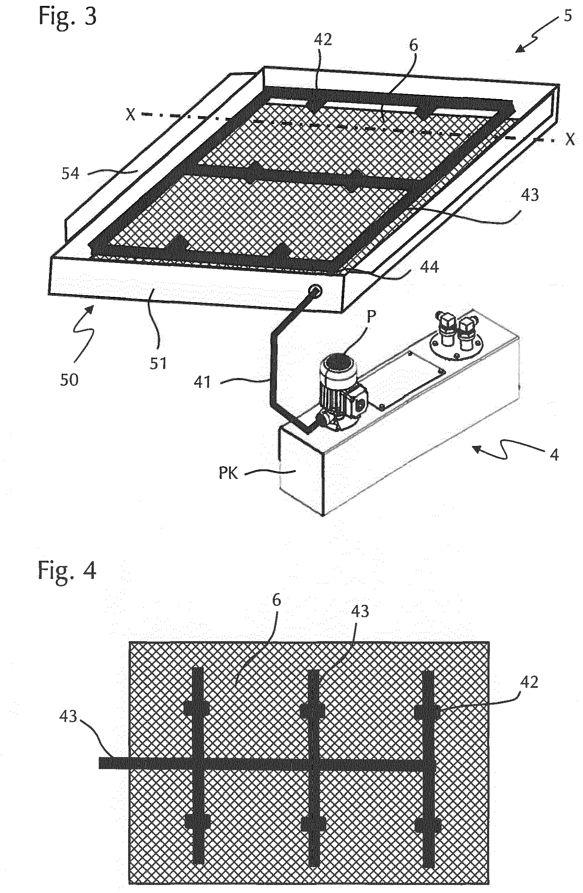

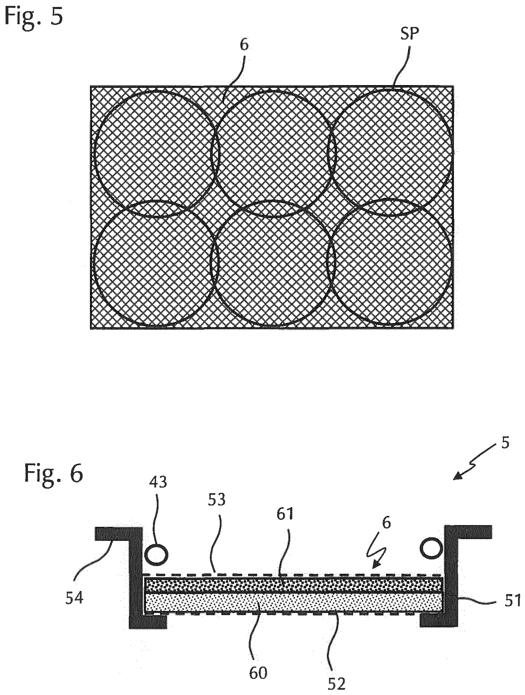

Die Düsenzuleitung 43 verläuft innerhalb der erfindungsgemäßen Vorabscheider-Stufe 5. Diese befindet sich im oberen Bereich des Abschnitts 20 und damit stromaufwärts der Hauptabscheider-Stufe 3 mit den Hauptfilterelementen 3-1, 3-2 und 3-3. Die Vorabscheider-Stufe 5 ist bevorzugt als Modul ausgebildet, wie es beispielhaft in Figur 3, angeschlossen an ein Pumpensystem der Sprühvorrichtung 4, dargestellt ist. Figur 6 zeigt zudem einen Querschnitt entlang der Linie X-X der Figur 3. Die Vorabscheider-Stufe 5 bzw. das Modul umfassen ein schubladenartiges Gehäuse 50 mit rechteckigem Grundriss. Das Gehäuse 50 weist einen Rahmen aus vier Seitenwänden 51 auf, deren untere Enden bevorzugt nach innen eingebogen sind und eine Auflagefläche für einen gasdurchlässigen Boden 52 bilden. Der gasdurchlässige Boden kann beispielsweise aus einem Gitter oder einer Lochplatte aus Metall oder Kunststoff bestehen. Auf diesem liegt der Filter 6 auf, der im gezeigten Fall aus einer Lage Filtervlies 60 und einer diese abdeckenden Filterauflage 61 besteht. Der Filter 6 deckt den Boden 52 vollständig ab, und die Vorabscheider-Stufe 5 ist so bemessen, dass alles Rohgas, welches durch den Einlass 10 ins Innere des Abscheiders 1 geführt wird, den Filter 6 passieren muss. Zur Förderung des Rohgases dient dabei in an sich bekannter Weise der Ventilator V.

Konkret wird als Filtervlies 60 bevorzugt ein Metallfaservlies eingesetzt, als Filterauflage 61 bevorzugt ein Spinnvlies aus Kunststoff, welches feiner ist als das Metallfaservlies, aber gröber als die nachfolgenden Hauptfilterelemente 3-1, 3-2 und 3-3. Der Filter 6 ist so ausgelegt, dass er der Klassifizierung "Coarse" oder "ePM10" nach ISO 16890-1:2017-08 entspricht. Damit eignet sich der Filter 6 zum Abtrennen größerer fester Partikel, die vom Rohgas in den Abscheider mitgeschleppt werden.

Der Filter 6 trennt jedoch auch bereits flüssige Verunreinigungen aus dem Rohgas ab, wenn er, wie erfindungsgemäß vorgesehen, mittels der Sprühvorrichtung 4 mit Flüssigkeit aus dem Flüssigkeitsreservoir F befeuchtet wird. Die Trennwirkung ist dann besonders groß, wenn der Filter großflächig und möglichst über seine gesamte Oberfläche gleichmäßig mit Flüssigkeit besprüht wird. Dies wird am besten erreicht, wenn mehrere Sprühdüsen 42 möglichst gleichmäßig oberhalb des Filters 6 verteilt angeordnet werden, wie dies in Figur 3 an einem ersten Beispiel gezeigt ist. Die Sprühdüsen 42 sind dabei in zwei Reihen angeordnet, die parallel zu den Längsseiten 51 des Gehäuses 50 verlaufen. Die Zuleitungen 43, welche Flüssigkeit zu den Sprühdüsen 42 transportieren, verlaufen entlang der Innenseiten der Seitenwände 51 und mit einem geringen Abstand zu diesen. Außerdem verbindet eine Querleitung die zwei längsseitigen Leitungen und versorgt dort die zwei mittleren Sprühdüsen, welche einen mittleren Bereich des Filters 6 mit Flüssigkeit benetzen. Die in Figur 3 gezeigte Verlegung der Leitungen 43 deckt relativ wenig Oberfläche des Filters 6 ab und erlaubt so einen guten Zugang zum Filter, was dessen Austausch deutlich vereinfacht.

Muss der Filter 6 ersetzt werden oder ist aus sonst einem Grund der Zugriff auf die Vorabscheider-Stufe 5 erforderlich, ist dies erfindungsgemäß besonders einfach möglich. Durch den modularen Aufbau kann das gesamte Modul mit Gehäuse 50, Zuleitungen 43 und Sprühdüsen 42 sowie Filter 6 aus dem Gehäuse 2 entnommen werden. Dafür kann zunächst die Leitung 41 von der Kupplung 44 abgetrennt werden. Anschließend wird das gesamte Gehäuse 50 mit Inhalt wie eine Schublade aus dem Gehäuse 2 des Abscheiders 1 nach vorne herausgezogen. Dabei gleiten die Haltevorsprünge 54 des Moduls auf hier nicht dargestellten Tragholmen des Gehäuses 2 entlang. Eine optionale Abdeckung 53, die wie der Boden 52 gasdurchlässig ausgebildet ist und Schutz und Begrenzung für den Filter 6 bietet, wird abgenommen oder gemeinsam mit dem Filter 6 aus dem Gehäuse entfernt. Eine Entnahme der Zuleitungen 43 ist dabei nicht zwingend erforderlich, kann aber grundsätzlich ebenfalls vorgesehen werden. Austausch oder Reparatur dieser Komponenten ist daher in einfacher Weise möglich. Ebenfalls ist ein vollständiger Austausch des Moduls denkbar.

Figur 4 zeigt eine alternative Anordnung von Sprühdüsen 42 und Zuleitungen 43. Hier ist eine zentrale Zuleitung vorhanden, von welcher drei Querleitungen abzweigen, an denen jeweils zwei Sprühdüsen 42 befestigt sind. Diese Variante bedeckt einen größeren Teil der Filteroberfläche, sodass der Zugang zum Filter 6 etwas schwieriger ist als bei der Variante der Figur 3. Selbstverständlich sind im Rahmen der Erfindung auch beliebige andere Anordnungen von Zuleitungen und Sprühdüsen denkbar.

Figur 5 zeigt eine Draufsicht auf die Oberfläche des Filters 6. Die auf der Oberfläche wiedergegebenen Kreise SP sollen das Sprühbild der Sprühdüsen 42 der beiden Ausführungsvarianten der Figuren 3 und 4 verdeutlichen. In beiden Fällen wurden als Sprühdüsen Runddüsen eingesetzt, die zu einer kreisförmigen Benetzung der Oberfläche des Filters 6 führen. Die Sprühdüsen 42 sind dabei so angeordnet, dass sich ihre Sprühbilder teilweise überlagern, sodass insgesamt eine sehr großflächige und beinahe vollständige Benetzung der Filteroberfläche erzielt wird. Die Benetzung erfolgt dabei von der stromabwärts liegenden Oberfläche des Filters 6 her. Dabei können die Sprühdüsen 42 so auf die Filteroberfläche gerichtet sein, dass Flüssigkeit direkt in Richtung auf die Filteroberfläche gesprüht wird. Alternativ ist es ebenfalls möglich, die Sprühdüsen von der Filteroberfläche weg zu richten, sodass Flüssigkeit stromabwärts - also in Figur 2 nach oben - austritt und dann infolge der Schwerkraft auf die Filteroberfläche "herunterregnet". So oder so läuft ein Teil der Flüssigkeit durch den Filter 6 hindurch nach unten, tropft vom Filter ab und fällt in das Flüssigkeitsreservoir F zurück. Von dort kann Flüssigkeit wieder entnommen werden, um mittels der Pumpe für eine erneute Benetzung des Filters zu den Sprühdüsen 42 gefördert zu werden.

Das Besprühen des Filters 6 kann kontinuierlich oder in Intervallen erfolgen. Letzteres ist aus Kostengründen bevorzugt. Die Intervalle sollten dabei so gewählt werden, dass der Filter 6 nicht trocken fällt. Geeignete Intervalle können durch einfache Versuche für die jeweiligen Prozessparameter leicht festgestellt werden. Möglich sind beispielsweise Wechsel zwischen 30 Sekunden langer Besprühung des Filters und 30 Sekunden langer Pause oder Sprühvorgänge von einer Minute Länge im Wechsel mit 30 Sekunden Pause. Ob der Filter in Gefahr ist, trocken zu fallen, kann außerdem mithilfe eines Flüssigkeitssensors FS festgestellt werden, der im Flüssigkeitsreservoir F angeordnet ist. Der Flüssigkeitssensor FS misst den Füllstand der Flüssigkeit im Flüssigkeitsreservoir. Dabei ist ein Ansteigen des Flüssigkeitsspiegels ein Indiz für eine zu geringe Befeuchtung des Filters 6. Tropft zu viel Flüssigkeit vom Filter 6 in das Flüssigkeitsreservoir F hinunter, ohne dass der Filter erneut mit Flüssigkeit besprüht wird, erhöht sich die Menge an Flüssigkeit im Flüssigkeitsreservoir. Die Vorrichtung kann also so gesteuert werden, dass bei Überschreiten eines vorgegebenen Flüssigkeitsspiegels vom Flüssigkeitssensor FS ein Signal an eine Steuervorrichtung gesendet wird. Die Steuervorrichtung, bei der sich entweder um die Steuervorrichtung S des Abscheiders oder um eine in die Pumpenvorrichtung, beispielsweise in den Pumpenkasten PK, integrierte Steuervorrichtung handelt, veranlasst dann die Sprühvorrichtung, einen Benetzungsvorgang zu starten.

Der erfindungsgemäße Abscheider 1 weist im unteren Abschnitt 20 außerdem eine Temperiervorrichtung T auf, mit welcher die Flüssigkeit im Flüssigkeitsreservoir F erwärmt oder abgekühlt werden kann. Dabei kann es sich um eine Folien- oder Plattenheiz- bzw. -kühlvorrichtung handeln, die vorzugsweise auf der Außenseite der Bodenplatte, welche den Abschnitt 20 nach unten begrenzt, angeordnet ist. Alternativ kann die Temperiervorrichtung in der Zuleitung zur Sprühvorrichtung angeordnet sein und eine Heiz- und/oder Kühlvorrichtung umfassen, die die der Sprühvorrichtung zugeleitete Flüssigkeit erwärmt oder kühlt. Zur Messung der Temperatur der Flüssigkeit ist im Flüssigkeitsreservoir F ein Temperatursensor TS angeordnet. Diese Ausstattung ermöglicht es dem erfindungsgemäßen Abscheider, die Temperatur der Flüssigkeit so einzustellen, dass eine optimale Reinigung des Rohgases erfolgt. Das Prinzip beruht darauf, dass der Filter 6, welcher mit der temperierten Flüssigkeit besprüht wird, die gleiche Temperatur wie die Flüssigkeit annimmt. Der Filter kann damit auf eine Temperatur gebracht werden, bei der die Abscheidung von Verunreinigungen aus dem Rohgas besonders gut funktioniert. Beispielsweise kann der Filter 6 angewärmt werden, um gefrorene Aerosolteilchen aus sehr kaltem Rohgas zunächst aufzutauen und damit erheblich besser an der Filteroberfläche anlagern zu können. Umgekehrt können heiße Rohgase durch Kühlung des Filters 6 abgekühlt werden.

Weitere Verfahrensparameter wie die Menge der versprühten Flüssigkeit, die Größe der versprühten Flüssigkeitsteilchen, deren Verteilung sowie der Druck, mit welchem die Flüssigkeit versprüht wird, können ebenfalls entsprechend den vorgefundenen Gegebenheiten angepasst und optimiert werden. Die Steuerung erfolgt dabei ebenfalls über die Steuervorrichtung der Pumpenvorrichtung und/oder die Steuervorrichtung S des Abscheiders 1. Die sonstigen Verfahrensparameter des Abscheiders, beispielsweise für den Bereich der Hauptabscheider-Stufe 3, werden in der im Stand der Technik üblichen Art und Weise eingestellt.

Das durch den Einlass 10 in den erfindungsgemäßen Abscheider eintretende Rohgas trifft im ersten und untersten Abschnitt 20 zunächst auf die erfindungsgemäße Vorabscheider-Stufe 5 mit dem mit Flüssigkeit befeuchteten Filter 6. Dieser trennt nicht nur grobe feste Partikel wie Metallteilchen, Ruß oder Ähnliches aus dem Rohgas ab, sondern bereits auch einen Teil der flüssigen Verunreinigungen, die sich an den befeuchteten Fasern des Filters 6 niederschlagen, zu größeren Tropfen agglomerieren und dann in das Flüssigkeitsreservoir F heruntertropfen. Die Vorabscheider-Stufe 5 befreit das Rohgas also bereits von deutlich mehr Verunreinigungen als die Vorfilter in Abscheidern des Standes der Technik.

Die sich stromabwärts anschließenden Filterstufen entsprechen dann grundsätzlich denjenigen des Standes der Technik. So handelt es sich bei den Hauptfilterelementen 3-1 und 3-2 der Hauptabscheider-Stufe 3 vorzugsweise um Koaleszenz-Filter mit Filterelementen beispielsweise aus Glasfaservlies oder Glasfaserpapier, an denen sich flüssige Verunreinigungen aus dem Rohgas wie Öl, Kühl- oder Schmiermittel ansammeln, anwachsen und nach unten abtropfen. Die von den Koaleszenz-Filter abtropfende Flüssigkeit trifft im Fall der vorliegenden Erfindung auf den darunter angeordneten Filter 6 der Vorabscheider-Stufe 5 und trägt ebenfalls zu dessen Befeuchtung bei. Schlussendlich landet die abgeschiedene Flüssigkeit dann im Flüssigkeitsreservoir F. Nach dem Passieren der Koaleszenz-Filter 3-1 und 3-2 ist das Rohgas bereits weitgehend von sehr feinen flüssigen Verunreinigungen wie Ölnebeln frei. Im abschließenden Hauptfilterelement 3-3, bei dem es sich vorzugsweise um einen HEPA-Filter, beispielsweise der Filterklasse H13 entsprechend EN 1822, handelt, werden auch feinste Verunreinigungen wie Rauch, Bakterien, Pollen, Sporen oder ähnliches aus dem Rohgas entfernt, sodass das den Auslass 11 verlassende Reingas, bei dem es sich in der Regel um Luft handelt, bedenkenlos in die Umgebung des Abscheiders 1 entlassen werden kann.

### Bezugszeichenliste

| | | | |
|---|---|---|---|
| 1 | Abscheider | | |
| 10 | Einlass | 50 | schubladenartiges Gehäuse |
| 11 | Auslass | 51 | Seitenwand (von 50) |
| 2 | Gehäuse des Abscheiders | 52 | gasdurchlässiger Boden (von 50) |
| 20 | erster Gehäuseabschnitt | 53 | gasdurchlässige Abdeckung |
| 21 | zweiter Gehäuseabschnitt | 54 | Haltevorsprung (von 50 |
| 22 | dritter Gehäuseabschnitt | 6 | Filter (von 5) |
| 23 | vierter Gehäuseabschnitt | 60 | Filtervlies |
| 24 | fünfter Gehäuseabschnitt | 61 | Filterauflage |
| 3 | Hauptabscheider-Stufe | D | Druckanzeige |
| 3-1 | erstes Hauptfilterelement | F | Fluidreservoir |
| 3-2 | zweites Hauptfilterelement | FS | Füllstandssensor |
| 3-3 | drittes Hauptfilterelement | FT | Fluidtröpfchen |
| 4 | Sprühvorrichtung | P | Pumpe |
| 40 | Flüssigkeitsableitung | PK | Pumpenkasten |
| | | S | Steuervorrichtung |
| 41 | Flüssigkeitszuleitung | SP | Sprühbild |
| 42 | Sprühdüse | | |
| 43 | Düsenzuleitung | T | Temperiervorrichtung |
| 44 | Kupplung | TS | Temperatursensor |
| 5 | Vorabscheider-Stufe | V | Ventilator |

## Patentansprüche

1. Als in einen Abscheider (1) einsetz- und herausnehmbares, als Baugruppe insgesamt vorgefertigtes Modul ausgebildete Vorabscheider-Stufe (5), welche aufweist:
- einen Filter (6) der Filtergruppe "Coarse" oder "ePM10" entsprechend ISO 16890-1:2017-08,
- wenigstens eine Sprühdüse (42) zum Besprühen des Filters (6),
- wenigstens eine Zuleitung (43) zur Versorgung der wenigstens einen Sprühdüse (42) mit Flüssigkeit und
- eine Kupplung (44) zum Anschluss der wenigstens einen Zuleitung (43) an eine Sprühvorrichtung (4) des Abscheiders (1),
**dadurch gekennzeichnet,**
**dass** die Vorabscheider-Stufe (5) in einem schubladenartigen Gehäuse (50) mit Seitenwänden (51) und einem gasdurchlässigen Boden (52) angeordnet ist.

2. Abscheider (1) zur Abscheidung einer Flüssigkeit aus einem Rohgas, aufweisend
- ein Gehäuse (2) mit einem Einlass (10) für das Rohgas und einem Auslass (11) für Reingas,
- eine Hauptabscheider-Stufe (3) mit mindestens einem Hauptfilterelement (3-1, 3-2, 3-3),
- eine Vorabscheider-Stufe (5), die der Hauptabscheider-Stufe (3) stromaufwärts vorgeschaltet ist, wobei Hauptabscheider-Stufe (3) und Vorabscheider-Stufe (5) im Strömungsweg zwischen Einlass (10) und Auslass (11) angeordnet sind,
- ein Flüssigkeitsreservoir (F) sowie
- eine Sprühvorrichtung (4) zur Entnahme und zum Versprühen von Flüssigkeit aus dem Flüssigkeitsreservoir (F),
**dadurch gekennzeichnet,**
**dass** die Vorabscheider-Stufe (5) eine Vorabscheider-Stufe gemäß Anspruch 1 ist.

3. Abscheider oder Vorabscheider-Stufe nach einem der vorhergehenden Ansprüche,
**dadurch gekennzeichnet,**
**dass** der Filter (6) ein Filtervlies (60) aus Kunststoff oder Metall umfasst, das bevorzugt flach und nicht gefaltet ausgebildet ist und insbesondere aus einem Polyolefin, bevorzugt Polyethylen, Aluminium, Edel- oder Chromstahl besteht.

4. Abscheider oder Vorabscheider-Stufe nach Anspruch 3,
**dadurch gekennzeichnet,**
**dass** das Filtervlies (60) mit einer Filterauflage (61) bedeckt ist, die bevorzugt ausgewählt ist aus einem Filtergewebe, Filterschwamm, Lamellenfilter oder Filtervlies, insbesondere einem Spinnvlies aus Kunststoff, wobei die Filterauflage (61) feiner ist als das Filtervlies (60), aber gröber als das wenigstens eine Hauptfilterelement (3-1, 3-2, 3-3) der Hauptabscheider-Stufe (3).

5. Abscheider oder Vorabscheider-Stufe nach einem der vorhergehenden Ansprüche,
**dadurch gekennzeichnet,**
**dass** die Sprühvorrichtung (4) mehrere stromabwärts und insbesondere oberhalb des Filters (6) verteilt angeordnete Sprühdüsen (42) aufweist, die ausgebildet sind, die Oberfläche des Filters (6) großflächig mit Flüssigkeit zu besprühen.

6. Abscheider oder Vorabscheider-Stufe nach einem der vorhergehenden Ansprüche,
**dadurch gekennzeichnet,**
**dass** das schubladenartige Gehäuse (50) mit einer gasdurchlässigen Abdeckung (53) und optional zwei sich von gegenüberliegenden Seitenwänden (51) erstreckenden Haltevorsprüngen (54) versehen ist.

7. Abscheider oder Vorabscheider-Stufe nach Anspruch 6,
**dadurch gekennzeichnet,**
**dass** die wenigstens eine Zuleitung (43) entlang einer Seitenwand (51) innerhalb des schubladenartigen Gehäuses (50) geführt ist und insbesondere entlang mehrerer, bevorzugt aller, Seitenwände (51) verläuft.

8. Abscheider nach einem der vorhergehenden Ansprüche,
**dadurch gekennzeichnet,**
**dass** er eine Temperiervorrichtung (T) zur Einstellung der Temperatur der Flüssigkeit umfasst.

9. Verfahren zum Nachrüsten eines Abscheiders (1) zur Abscheidung einer Flüssigkeit aus einem Rohgas, welcher aufweist:
- ein Gehäuse (2) mit einem Einlass (10) für das Rohgas und einem Auslass (11) für Reingas,
- eine Hauptabscheider-Stufe (3) mit mindestens einem Hauptfilterelement (3-1, 3-2, 3-3), die im Strömungsweg zwischen Einlass (10) und Auslass (11) angeordnet ist,
mit einer Vorabscheider-Stufe (5) und einer Sprühvorrichtung (4) zum Erhalt eines Abscheiders (1) nach einem der Ansprüche 2 bis 8,
**dadurch gekennzeichnet,**
**dass** eine Vorabscheider-Stufe nach einem der Ansprüche 1,3 bis 7 strömungsaufwärts der Hauptabscheider-Stufe (3) in den Strömungsweg eingesetzt wird.

10. Verfahren nach Anspruch 9,
**dadurch gekennzeichnet,**
**dass** die Vorabscheider-Stufe in Form einer ausziehbaren Schublade (50) in den Abscheider (1) eingesetzt wird und zu diesem Zweck insbesondere mit seitlich über zwei gegenüberliegende Seitenwände (51) vorstehenden Haltevorsprüngen (54) versehen ist.

11. Verfahren zum Betreiben eines Abscheiders (1) nach einem der Ansprüche 2 bis 8,
**dadurch gekennzeichnet,**
**dass** die Sprühvorrichtung (4) zumindest während des Einleitens von Rohgas durch den Einlass (10) kontinuierlich oder intervallartig betrieben wird, sodass der Filter (6) durchgehend oder während bestimmter Zeiträume mit Flüssigkeit benetzt wird.

12. Verfahren nach Anspruch 11,
**dadurch gekennzeichnet,**
**dass** vom Filter (6) abtropfende Flüssigkeit im Flüssigkeitsreservoir (F) aufgefangen wird.

13. Verfahren nach Anspruch 11 oder 12,
**dadurch gekennzeichnet,**
**dass** der Füllstand des Flüssigkeitsreservoirs (F) ermittelt wird, um festzustellen, ob der Filter (6) ausreichend mit Flüssigkeit benetzt ist.

14. Verfahren nach einem der Ansprüche 11 bis 13,
**dadurch gekennzeichnet,**
**dass** es zum Abtrennen von Öl aus Luft, insbesondere aus Abluft der metallverarbeitenden Industrie, eingesetzt wird.

## Claims

1. A pre-separator stage (5) insertable into and removable from a separator (1) and designed as a prefabricated module, featuring:
- a filter (6) of the "Coarse" or "ePM10" filter group corresponding to ISO 16890-1:2017- 08,
- at least one spray nozzle (42) for spraying the filter (6),
- at least one supply line (43) for supplying the at least one spray nozzle (42) with liquid and
- a coupling (44) for connecting the at least one supply line (43) to a spraying device (4) of the separator (1),
**characterized in that**
the pre-separator stage (5) is disposed in a drawer-like housing (50) having side walls (51) and a gas-permeable bottom (52).

2. A separator (1) for separating a liquid from a raw gas, featuring
- a housing (2) having an inlet (10) for the raw gas and an outlet (11) for clean gas,
- a main separator stage (3) having at least one main filter element (3-1, 3-2, 3-3),
- a pre-separator stage (5) located upstream of the main separator stage (3), wherein the main separator stage (3) and the pre-separator stage (5) are disposed in the flow path between inlet (10) and outlet (11),
- a liquid reservoir (F) as well as
- a spraying device (4) for extracting and spraying liquid from the liquid reservoir (F),
**characterized in that**
the pre-separator stage (5) is a pre-separator stage according to claim 1.

3. The separator or pre-separator stage according to one of the preceding claims,
**characterized in that**
the filter (6) comprises a filter fleece (60) made of plastic material or metal, which is preferably designed to be flat and not folded and in particular consists of a polyolefin, preferably polyethylene, aluminum, stainless steel or chromium steel.

4. The separator or pre-separator stage according to claim 3,
**characterized in that**
the filter fleece (60) is covered with a filter layer (61) preferably selected from a filter fabric, filter sponge, lamellar filter or filter fleece, in particular a spunbonded fabric made of plastic material, wherein the filter layer (61) is finer than the filter fleece (60), but coarser than the at least one main filter element (3-1, 3-2, 3-3) of the main separator stage (3).

5. The separator or pre-separator stage according to one of the preceding claims, **characterized in that**
the spraying device (4) features a plurality of spray nozzles (42) distributed downstream of and, in particular, above the filter (6), which are designed to spray the surface of the filter (6) with liquid over a large area.

6. The separator or pre-separator stage according to one of the preceding claims, **characterized in that**
the drawer-like housing (50) is provided with a gas-permeable cover (53) and optionally two retaining projections (54) extending from mutually opposing side walls (51).

7. The separator or pre-separator stage according to claim 6,
**characterized in that**
the at least one supply line (43) is guided along a side wall (51) inside the drawer-like housing (50) and, in particular, extends along a plurality, preferably all, of the side walls (51).

8. The separator according to one of the preceding claims,
**characterized in that**
it comprises a temperature control device (T) for setting the temperature of the liquid.

9. A method for retrofitting a separator (1) for separating a liquid from a raw gas, said separator featuring:
- a housing (2) having an inlet (10) for the raw gas and an outlet (11) for clean gas,
- a main separator stage (3) having at least one main filter element (3-1, 3-2, 3-3) disposed in the flow path between inlet (10) and outlet (11),
having a pre-separator stage (5) and a spraying device (4) for obtaining a separator (1) according to one of the claims 2 to 8,
**characterized in that**
a pre-separator stage according to one of the claims 1,3 to 7 is inserted into the flow path upstream of the main separator stage (3).

10. The method according to claim 9,
**characterized in that**
the pre-separator stage, in the shape of an extendable drawer (50), is inserted into the separator (1) and for this purpose is provided, in particular, with retaining projections (54) projecting laterally across two mutually opposing side walls (51).

11. The method for operating a separator (1) according to one of the claims 2 to 8, **characterized in that**
the spraying device (4) is operated continuously or intermittently at least during the introduction of raw gas through the inlet (10), so that the filter (6) is wetted continuously or during certain periods with liquid.

12. The method according to claim 11,
**characterized in that**
liquid dripping from the filter (6) is collected in the liquid reservoir (F).

13. The method according to claim 11 or 12,
**characterized in that**
the fill level of the liquid reservoir (F) is determined to find out whether the filter (6) is sufficiently wetted with liquid.

14. The method according to one of the claims 11 to 13,
**characterized in that**
it is used to separate oil from air, in particular from exhaust air from the metalworking industry.

## Revendications

1. Étape de pré-séparateur (5) pouvant être inséré et retirée dans un séparateur (1), conçue en tant que module entièrement préfabriqué, qui présente:
- un filtre (6) du groupe de filtration "Coarse" ou "ePM10" conformément à la norme ISO 16890-1:2017- 08,
- au moins une buse de pulvérisation (42) pour pulvériser le filtre (6),
- au moins une conduite d'alimentation (43) pour alimenter en liquide la buse de pulvérisation (42), au moins au nombre d'une, et
- un accouplement (44) pour raccorder la conduite d'alimentation (43), au moins au nombre d'une, à un dispositif de pulvérisation (4) du séparateur (1),
**caractérisé en ce que**
l'étage de pré-séparateur (5) est disposé dans un boîtier (50) en forme de tiroir ayant des parois latérales (51) et un fond (52) perméable aux gaz.

2. Séparateur (1) destiné à séparer un liquide d'un gaz brut, présentant
- un boîtier (2) ayant une entrée (10) pour le gaz brut et une sortie (11) pour le gaz pur,
- un étage de séparateur principal (3) ayant au moins un élément filtrant principal (3-1, 3-2, 3-3),
- un étage de pré-séparateur (5) située en amont de l'étage de séparateur principal (3), dans lequel l'étage de séparateur principal (3) et l'étage de pré-séparateur (5) sont disposés dans le trajet d'écoulement entre l'entrée (10) et la sortie (11),
- un réservoir de liquide (F) ainsi qu'
- un dispositif de pulvérisation (4) pour prélever et pulvériser du liquide provenant du réservoir de liquide (F),
**caractérisé en ce que**
l'étage de pré-séparateur (5) est un étage de pré-séparateur selon la revendication 1.

3. Séparateur ou étage de pré-séparateur selon l'une quelconque des revendications précédentes,
**caractérisé en ce que**
le filtre (6) comprend un non-tissé filtrant (60) en matière plastique ou en métal, qui est réalisé de préférence à plat et non plié et qui est notamment constitué d'une polyoléfine, de préférence de polyéthylène, d'aluminium, d'acier inoxydable ou d'acier chromé.

4. Séparateur ou étage de pré-séparateur selon la revendication 3,
**caractérisé en ce que**
le non-tissé filtrant (60) est recouvert d'un revêtement filtrant (61) qui est choisi de préférence parmi un tissu filtrant, une éponge filtrante, un filtre à lamelles ou un non-tissé filtrant, notamment un filé-lié en matière plastique, dans lequel le revêtement filtrant (61) est plus fin que le non-tissé filtrant (60), mais plus grossier que l'élément filtrant principal (3-1, 3-2, 3-3), au moins au nombre d'un, de l'étage de séparateur principal (3).

5. Séparateur ou étage de pré-séparateur selon l'une quelconque des revendications précédentes,
**caractérisé en ce que**
le dispositif de pulvérisation (4) présente une pluralité de buses de pulvérisation (42) réparties en aval et notamment au-dessus du filtre (6), qui sont conçue s pour pulvériser du liquide sur une grande surface de la surface du filtre (6).

6. Séparateur ou étage de pré-séparateur selon l'une quelconque des revendications précédentes,
**caractérisé en ce que**
le boîtier (50) en forme de tiroir est pourvu d'un couvercle (53) perméable aux gaz et, optionnellement, de deux saillies de retenue (54) s'étendant depuis des parois latérales (51) opposées.

7. Séparateur ou étage de pré-séparateur selon la revendication 6,
**caractérisé en ce que**
la conduite d'alimentation (43), au moins au nombre d'une, est guidée le long d'une paroi latérale (51) à l'intérieur du boîtier (50) en forme de tiroir et s'étend notamment le long de la pluralité, de préférence de la totalité des parois latérales (51).

8. Séparateur selon l'une quelconque des revendications précédentes, **caractérisé en ce qu'**
il comprend un dispositif de régulation de température (T) pour régler la température du liquide.

9. Procédé de mise à jour d'un séparateur (1) destiné à séparer un liquide d'un gaz brut, qui présente:
- un boîtier (2) ayant une entrée (10) pour le gaz brut et une sortie (11) pour le gaz pur,
- un étage de séparateur principal (3) ayant au moins un élément filtrant principal (3-1, 3-2, 3-3) disposé dans le trajet d'écoulement entre l'entrée (10) et la sortie (11),
ayant un étage de pré-séparateur (5) et un dispositif de pulvérisation (4) pour obtenir un séparateur (1) selon l'une quelconque des revendications 2 à 8,
**caractérisé en ce qu'**
un étage de pré-séparateur selon l'une quelconque des revendications 1,3 à 7 est inséré en amont de l'étage de séparateur principal (3) dans le trajet d'écoulement.

10. Procédé selon la revendication 9,
**caractérisé en ce que**
l'étage de pré-séparateur, sous la forme d'un tiroir extractible (50), est inséré dans le séparateur (1) et est pourvu à cet effet notamment de saillies de retenue (54) faisant saillie latéralement sur deux parois latérales opposées (51).

11. Procédé pour opérer un séparateur (1) selon l'une quelconque des revendications 2 à 8,
**caractérisé en ce que**
le dispositif de pulvérisation (4) est opéré de manière continue ou intermittente au moins pendant l'introduction de gaz brut par l'entrée (10), de sorte que le filtre (6) est mouillé continuellement ou pendant des périodes déterminées avec du liquide.

12. Procédé selon la revendication 11,
**caractérisé en ce que**
le liquide s'égouttant du filtre (6) est recueilli dans le réservoir de liquide (F).

13. Procédé selon la revendication 11 ou 12,
**caractérisé en ce que**
le niveau de remplissage du réservoir de liquide (F) est déterminé afin de constater si le filtre (6) est suffisamment mouillé de liquide.

14. Procédé selon l'une quelconque des revendications11 à 13,
**caractérisé en ce qu'**
il est utilisé pour séparer l'huile de l'air, notamment de l'air évacué de l'industrie de transformation des métaux.
